# FASCICULE DE BREVET EUROPEEN

(11) **EP 3 114 916 B1**
(45) Date de publication et mention de la délivrance du brevet: **07.09.2022**
(21) Numéro de dépôt: 16177807.1
(22) Date de dépôt: 04.07.2016
(51) Int. Cl.: A01B 29/04

(54) **PNEUMATIQUE SILLONNEUR**
REIFEN MIT FURCHENZIEHER
FURROW-OPENING TIRE

(30) Priorité: 10.07.2015 FR 1556600
(43) Date de publication de la demande: 11.01.2017
(73) Titulaire: OTICO, 77650 Chalmaison (FR)
(72) Inventeur: PHELY, Olivier, 77520 THENISY (FR)
(74) Mandataire: Cabinet Netter

(56) Documents cités:
- EP-A1- 2 005 810
- EP-A1- 2 556 734
- DE-U1- 9 205 660
- FR-A1- 2 784 331

## Description

L'invention concerne un pneumatique sillonneur, en particulier prévu pour être monté sur un rouleau agricole.

Pour former des sillons dans des champs de terre, on utilise généralement un rouleau allongé que l'on déplace à travers champ. Un tel outil est parfois désigné « rouleau sillonneur » dans la technique. Le rouleau comprend un support cylindrique allongé et plusieurs pneumatiques montés les uns à côté des autres sur le support, chaque pneumatique travaillant dans un sillon respectif.

Chaque pneumatique comprend classiquement une partie formant semelle, par l'intermédiaire de laquelle le pneumatique se monte sur le support cylindrique, une partie formant bande de roulement, par l'intermédiaire de laquelle le pneumatique est en contact avec le fond du sillon et deux parties formant des flancs reliant chacun la bande de roulement à la semelle.

La demande de brevet français 15 52687 déposée le 30 mars 2015 au nom de la Demanderesse décrit un pneumatique sillonneur. La bande de roulement s'étend sur une portion réduite de la largeur du pneumatique, à l'extrémité radiale de celui-ci. Les flancs sont formés comme prolongement de la bande de roulement. Ils se raccordent à la semelle. Les flancs présentent une inclinaison qui varie peu et de manière sensiblement continue depuis la bande de roulement jusqu'à la semelle. Ces pneumatiques présentent une section radiale en forme générale de triangle équilatéral. Le sommet de ce triangle correspondant à l'extrémité radiale de ce pneumatique est arrondi. Ces pneumatiques permettent de travailler efficacement le sol. Ils présentent de bonnes capacités d'auto-nettoyage. En outre, la tenue les uns contre les autres des pneumatiques est efficace dans le temps.

Ces pneumatiques permettent de former des sillons rapprochés les uns des autres. Autrement dit, le bandeau de terre entre deux sillons voisins est étroit. La profondeur de pénétration de la bande de roulement dans la terre dépend fortement des propriétés de celle-ci, telles que sa composition, sa compacité, son humidité.

Pour créer des sillons plus espacés les uns des autres, on peut intercaler des entretoises entre les pneumatiques. La capacité du rouleau à s'auto-nettoyer est dégradée. La terre tend à s'accumuler sur les entretoises du fait de leur rigidité.

En outre, les entretoises présentent généralement une surface extérieure de forme cylindrique. Par conséquent, la bande de terre entre deux sillons est aplatie. Le document DE 92 05 660 montre un autre exemple d'un pneumatique pour rouleau sillonneur.

L'invention vise à améliorer la situation.

La Demanderesse propose à cet effet un pneumatique pour rouleau sillonneur du type comprenant :
- une semelle par l'intermédiaire de laquelle le pneumatique se monte sur un support de rouleau agricole,
- une bande de roulement opposée à la semelle, et
- deux flancs reliant la bande de roulement à la semelle.

La semelle, la bande de roulement et les flancs délimitant conjointement une chambre non gonflable. La bande de roulement comprend :
- au moins une portion en forme de crête, et
- deux portions d'épaulements reliant chacune la portion en forme de crête à un flanc respectif.

La chambre s'étend en partie au moins latéralement sous les portions d'épaulements et radialement dans la portion en forme de crête.

Le pneumatique proposé présente une bande de roulement et une large surface active. Il permet de travailler la partie creuse d'un sillon, les rebords de celui-ci et la bande de terre entre deux sillons voisins. En fonctionnement, la portion en forme de crête est mobile par rapport à la semelle tandis que les épaulements de la bande de roulement se déforment. Le décollage de la terre est efficace sur une grande partie de la largeur du pneumatique. En particulier, les zones de plus faibles hauteurs du pneumatique, c'est-à-dire les épaulements qui façonnent la portion de terre entre deux sillons, sont nettoyées en continu et s'encrassent peu. Dans la plupart des conditions de travail, un racloir devient superflu.

L'outil peut présenter les caractéristiques optionnelles suivantes:
- Les portions d'épaulements présentent une forme généralement convexe. Les épaulements fléchissent vers l'extérieur au cours du fonctionnement. L'évacuation de la terre est facilitée.
- Une surface extérieure de la portion en forme de crête porte au moins un élément de relief. Le pneumatique et le rouleau qui en est équipé présentent alors une meilleure accroche en rotation avec le sol. Les risques de blocage en rotation sont réduits, en particulier lorsque la terre est lourde ou collante et dans les virages.
- La semelle et/ou la bande de roulement comprennent au moins une portion faisant saillie dans la chambre, sous les portions d'épaulements, de manière à limiter par butée le rapprochement de la semelle et de la bande de roulement. La course d'affaissement de la bande de roulement vers la semelle en fonctionnement est réglée précisément.
- L'un au moins des flancs présente une surface latérale tronconique. Une différence de précontrainte axiale apparaît entre la bande de roulement et la semelle. Ainsi, les bandes de roulement de deux pneumatiques voisins peuvent être maintenues fermement l'une vers l'autre pour améliorer la continuité de la surface extérieure du rouleau tandis que les semelles présentent une mobilité axiale favorable à l'absorption des efforts, notamment en virage.
- L'une au moins des deux portions d'épaulements est reliée à un flanc respectif de sorte que la direction générale de la portion d'épaulement et la direction générale du flanc respectif forment un angle compris entre 90° et 135°. Cette plage permet de solliciter les flancs latéralement vers l'extérieur lors de l'affaissement de la bande de roulement tout en permettant une bonne déformation et un bon auto-nettoyage et en empêchant l'épaulement de former un pli ou de gondoler involontairement en utilisation, ce qui serait nuisible à l'auto-nettoyage, à la forme du sillon créée et à l'usure du pneumatique.
- La portion en forme de crête présente des pans inclinés de sorte que la direction générale de chacun des pans forme un angle compris entre 0° et 45° par rapport à une direction radiale. Un angle inférieur à 45° assure une bonne pénétration dans le sol, y compris lorsque la terre est dure ou sèche.
- L'une au moins des deux portions d'épaulements est reliée à la portion en forme de crête de sorte que la direction générale de la portion d'épaulement et la direction générale la portion en forme de crête forment un angle compris entre 90° et 120°. Ce domaine angulaire permet de limiter l'accumulation de terre et faciliter son glissement et son évacuation. Le pliage de la crête contre l'épaulement est évité. La dégradation du pneumatique par de la terre est limité. Une bonne indépendance de comportement dynamique entre les épaulements et la crête est assurée. La crête est en mouvement sensiblement radiale avec peu de déformation tandis que les épaulements présentent un mouvement de flexion et une déformation qui facilite le décollage de la terre.
- La portion en forme de crête s'étend radialement au-delà des portions d'épaulements sur une hauteur comprise entre 30 et 120 millimètres. Une telle plage de valeur permet de former un sillon suffisamment profond pour ne pas être comblé ensuite par des débris ou de la poussière tout en résistant à un affaissement sur lui-même et à l'érosion.
- Le rapport de largeur sur laquelle s'étend la portion en forme de crête sur la largeur totale du pneumatique est compris entre 15 % et 70 %. Au-delà de cette plage, la bonne pénétration de la crête dans le sol est compromise, soit parce que la résistance du sol est trop importante, soit parce que la crête tend à fléchir avant de pénétrer le sol.

Selon un autre aspect de l'invention, la Demanderesse propose un rouleau sillonneur comprenant un support et au moins un pneumatique tel que définit ci-avant qui se monte sur le support.

La présente invention sera mieux comprise à la lecture de la description détaillée de quelques modes de réalisations pris à titre d'exemples nullement limitatifs et illustrés par les dessins annexés sur lesquels :
- la figure 1 montre une vue en perspective d'une portion de rouleau équipé de pneumatiques selon l'invention ;
- la figure 2 montre une vue latérale de la portion de rouleau de la figure 1 ;
- la figure 3 montre une vue de face et partiellement en coupe de la portion de rouleau de la figure 1 ;
- la figure 4 montre un détail de la figure 3 ;
- la figure 5 montre une vue en coupe d'un pneumatique selon l'invention à l'état démonté ;
- la figure 6 montre une vue en perspective d'un pneumatique selon l'invention ;
- la figure 7 montre une vue en coupe du pneumatique de la figure 6 ;
- la figure 8 montre une vue en perspective d'un pneumatique selon l'invention ;
- la figure 9 montre une vue en coupe du pneumatique de la figure 8 ;
- la figure 10 montre une vue en perspective d'un pneumatique selon l'invention ;
- la figure 11 montre une vue en coupe du pneumatique de la figure 10 ;
- la figure 12 montre une vue en perspective d'un pneumatique selon l'invention ;
- la figure 13 montre une vue en coupe du pneumatique de la figure 12 ;
- la figure 14 montre une vue en perspective d'un pneumatique selon l'invention ;
- la figure 15 montre une vue en coupe du pneumatique de la figure 14 ;
- la figure 16 montre une vue en perspective d'un pneumatique selon l'invention ; et
- la figure 17 montre une vue en coupe du pneumatique de la figure 16.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant. Il est relevé que des éléments comme la géométrie de profil d'un pneumatique sont difficiles à définir complètement, autrement que par le dessin.

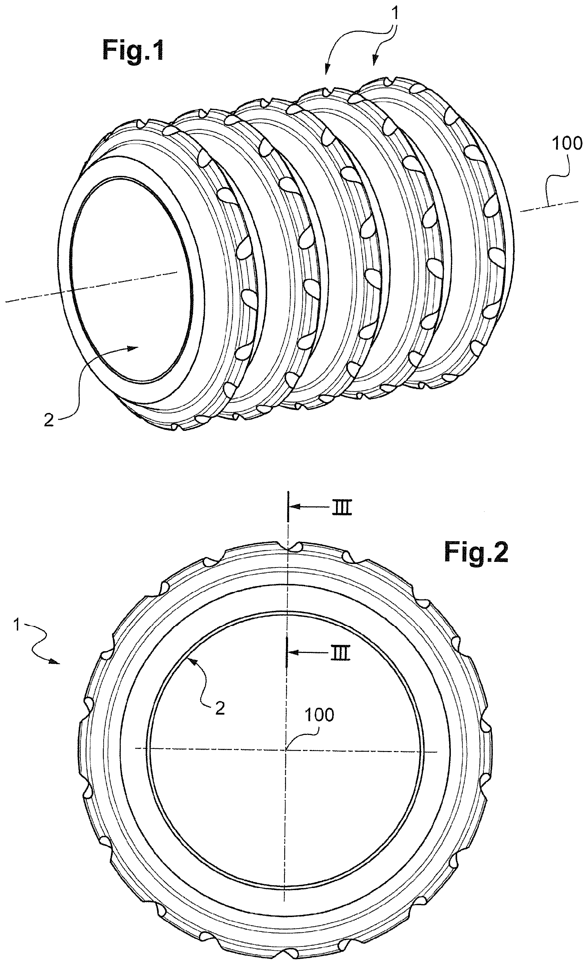

Il est fait référence aux figures 1 à 3.

Elles montrent une portion d'un rouleau agricole pour la formation de sillons. Le rouleau correspond à ce que l'on appelle un rouleau sillonneur dans la technique. Le rouleau comprend un support 2 généralement cylindrique et allongé, et une pluralité de pneumatiques 1 enfilés sur le support 2. Les pneumatiques 1 sont disposés les uns à côté des autres selon la direction longitudinale du support 2. Les pneumatiques 1 sont répartis longitudinalement d'une manière qui correspond à ce que l'on appelle l'entre-rang dans la technique, c'est-à-dire l'écartement entre deux sillons adjacents. Ici, les pneumatiques sont au contact les uns des autres.

Les pneumatiques 1 sont serrés axialement, dans la direction longitudinale du support 2. À chacune de ses extrémités, non représentées ici, le rouleau comprend un flasque, ou joue, fixé au support 2. Le serrage axial des pneumatiques 1 est maintenu par les flasques.

Le rouleau est destiné à être monté à rotation autour de son axe longitudinal, par exemple sur le châssis d'une machine agricole.

Chaque pneumatique 1 présente une forme généralement annulaire avec un axe central 100. Chaque pneumatique 1 présente un plan médian 200 perpendiculaire à l'axe central 100. À l'état monté, l'axe central 100 de chaque pneumatique 1 est sensiblement confondu avec l'axe longitudinal du support 2.

Chaque pneumatique 1 présente une allure généralement symétrique par rapport à son plan médian 200.

Les pneumatiques 1 sont contraints selon la direction longitudinale du support 2. À l'état monté, la largeur d'un pneumatique 1 est inférieure à la largeur du pneumatique 1 à l'état libre, par exemple d'environ 5 %. Dans l'exemple décrit ici, la largeur 101 à l'état monté du pneumatique 1 est d'environ 150 millimètres tandis que la largeur au repos de ce pneumatique 1 est d'environ 157 millimètres. Les flasques du support 2 maintiennent cet état de contrainte à la fin du montage et en fonctionnement. Après montage et hors fonctionnement, l'état de contrainte des pneumatiques 1 est sensiblement homogène sur la largeur du rouleau.

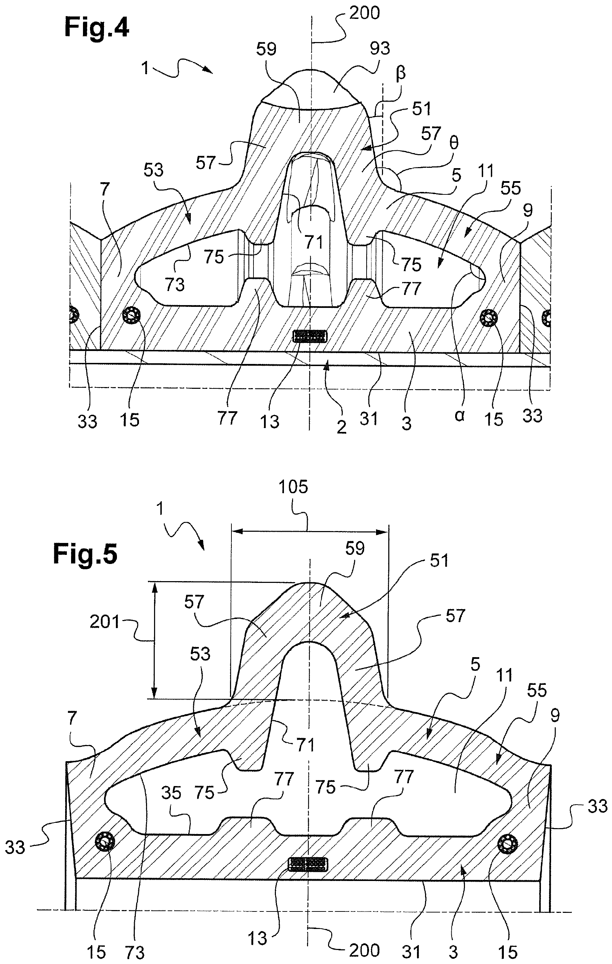

On fait référence aux figures 4 et 5. Elles montrent chacune le profil d'un pneumatique 1.

Le pneumatique 1 comprend une partie formant semelle 3, une partie formant bande de roulement 5 et deux parties formant flancs 7 et 9 qui relient chacun la bande de roulement 5 à la semelle 3. La semelle 3 et la bande de roulement 5 présentent chacune une forme généralement annulaire. En travail, la bande 5 roule sur le sol en formant un sillon. La bande de roulement 5 touche à la fois le fond du sillon, les parois latérales de celui-ci et une partie au moins des bandes de terre le séparant des sillons adjacents.

La semelle 3, la bande de roulement 5 et les flancs 7, 9 forment conjointement une enveloppe du pneumatique 1 autour d'une chambre 11. L'enveloppe est sensiblement uniforme sur la circonférence du pneumatique 1.

Le pneumatique 1 se monte sur le support 2 par la semelle 3.

La semelle 3 présente une surface de siège 31 de forme correspondant à une surface extérieure du support 2. Chacun des flancs 7, 9 présente une surface latérale 33 destinée à venir au contact d'une surface d'appui respective. Cette surface d'appui peut être :
- une surface latérale d'un pneumatique 1 monté de manière adjacente sur le support 2,
- une face d'une entretoise montée de manière adjacente au pneumatique 1 sur le support 2,
- une face d'un flasque du support 2.

Le pneumatique 1 est monté de manière serrée axialement. Il est écrasé en largeur, c'est-à-dire selon sa direction axiale. Les pneumatiques 1 se montent avec une précontrainte.

Ce serrage axial limite les pénétrations de terre et/ou débris entre les surfaces latérales 33 adjacentes de pneumatiques 1.

Dans le mode de réalisation de la figure 4, les surfaces latérales 33 sont sensiblement planes, à l'état libre comme à l'état précontraint (représenté sur la figure 4). Les surfaces latérales 33 s'étendent sensiblement parallèlement au plan médian 200.

Dans le mode de réalisation de la figure 5, les surfaces latérales 33 sont sensiblement tronconiques à l'état libre (représenté sur la figure 5). Vues en coupe radiale, les surfaces latérales 33 sont inclinées par rapport au plan médian 200. La largeur de la bande de roulement 5 est supérieure à la largeur de la semelle 3, de sorte que la section du pneumatique présente une forme générale trapézoïdale. Lorsque le pneumatique 1 est précontraint axialement, les surfaces latérales 33 s'appuient les unes contre les autres et adoptent une configuration plane ou quasi-plane. Par l'effet du retour élastique du pneumatique 1, plus on s'éloigne de l'axe central 100, plus la force de serrage entre deux pneumatiques 1 augmente.

La forme inclinée des surfaces latérales 33 et le serrage axial important au niveau des bandes de roulement 5 préserve la continuité des surfaces extérieures du rouleau lorsqu'il est soumis à des contraintes axiales importantes, par exemple lorsqu'il effectue en virage. Le risque d'insertion accidentelle de terre ou débris entre deux pneumatiques 1 est encore réduit. Le serrage plus faible entre les semelles 3 voisines autorise un léger coulissement des pneumatiques 1 autour du support 2, notamment en virage. Le comportement du rouleau est plus souple. Le risque de détérioration des pneumatiques est réduit. Si de la terre et/ou des débris viennent à s'insérer entre deux surfaces latérales 33, ils tendent à être chassés radialement, vers l'extérieur ou l'intérieur, grâce à l'inclinaison de ces surfaces. La présence de terre et/ou de débris près du support 2, sous la bande de roulement 5, est moins néfaste qu'entre deux bandes de roulement 5 où elle risque de dégrader des parties actives des pneumatiques 1. La continuité de la surface extérieure du rouleau est préservée. L'auto-nettoyage est encore amélioré.

La semelle 3 présente une surface intérieure 35 opposée à la surface de siège 31. La surface intérieure 35 s'étend sensiblement entre les flancs 7, 9.

La bande de roulement 5 comprend au moins une portion en forme de crête 51 et deux portions d'épaulements 53, 55.

Ici, la bande de roulement 5 comprend une crête 51 et deux épaulements 53, 55 reliant chacun la crête 51 à un flanc 7, 9 respectif. La crête 51 inclut un sommet 59 relié respectivement à l'une et l'autre des épaulements 53, 55 par des portions formant pans 57.

Ici, la crête 51 est centrée sur le plan médian 200. Les épaulements 53, 55 sont symétriques l'un à l'autre par rapport au plan médian 200.

En variante, la bande de roulement 5 comprend plusieurs crêtes, par exemple deux crêtes symétriques l'une à l'autre par rapport à un plan médian. Les crêtes sont adjacentes les unes aux autres. Les épaulements 53, 55 relient les deux crêtes d'extrémité axiale au flanc 7, 9 respectif par un épaulement 53, 55 respectif. Un tel pneumatique forme alors autant de sillons que de crêtes 51 sur sa largeur de travail.

La bande de roulement 5 présente une surface intérieure délimitant la chambre 11. Cette surface se décompose en plusieurs portions dont une portion de surface intérieure de crête 71 et deux portions de surface intérieure d'épaulements 73.

Dans les exemples décrits ici, les surfaces intérieures de la bande de roulement 5 comprennent des premières portions faisant saillie 75 dans la chambre 11, ici entre la surface intérieure de crête 71 et chacune des surfaces intérieures d'épaulements 73. La surface intérieure 35 de la semelle 3 porte des secondes portions formant saillies 77 dans la chambre 11 en regard des saillies 75 de la bande de roulement 5. En fonctionnement, la bande de roulement 5 s'affaisse en partie vers la semelle 3. Chaque saillie 75 vient en butée contre une saillie 77 de sorte que la course d'affaissement est limitée. Les saillies 75 de la bande de roulement 5 sont formées, ici, sensiblement dans le prolongement des pans 57 de la crête 51. Une telle configuration facilite la fabrication des pneumatiques 1. L'enveloppe est dépourvue de surépaisseur locale. Chaque partie de matière est positionnée à faible distance d'une surface intérieure ou extérieure de l'enveloppe. Lors du chauffage de l'élastomère par contact avec un moule et conduction thermique, la température de la matière est rapidement homogénéisée dans toute l'enveloppe. Le temps de fabrication est réduit.

Dans le mode de réalisation de la figure 4, les saillies 75, 77 présentent des formes semblables les unes aux autres. Leur largeur, c'est-à-dire leur dimension selon la direction axiale, est réduite. Dans le mode de réalisation de la figure 5, les saillies 75 de la bande de roulement 5 présentent de petites largeurs tandis que les saillies 77 de la semelle 3 présentent des formes différentes de grande largeur. Une différence de largeur entre une saillie 75, 77 et la saillie correspondante 77, 75 permet que les saillies 75, 77 s'appuient l'une contre l'autre, y compris lorsque qu'il existe un déplacement relatif de la semelle 3 et de la bande de roulement 5 selon la direction axiale. Autrement dit, lorsque le pneumatique 1 subit des contraintes de cisaillement selon la direction axiale, par exemple en virage, alors les saillies 75, 77 restent au moins partiellement en regard l'une de l'autre. L'appui en fin d'affaissement reste efficace.

Dans des variantes, les saillies 75 de la bande de roulement 5 sont plus larges que les saillies 77 de la semelle 3. En d'autres variantes, seule l'une parmi la semelle 3 et la bande de roulement 5 peut être pourvue de saillies. Le pneumatique 1 peut être dépourvu de saillie dans la chambre 11. Dans ce cas l'affaissement est par exemple stoppé par contact de la bande de roulement 5 contre la semelle 3.

La chambre 11 s'étend latéralement sous les épaulements 53, 55. La chambre 11 s'étend aussi radialement dans la crête 51. La crête est creuse et les portions latérales du pneumatique 1 également. En outre, la chambre 11 est unitaire. Chacun des espaces laissés vides sous les épaulements 53, 55 est en communication fluidique avec l'espace laissé vide sous la crête 51 et dans celle-ci. La chambre 11 est en communication fluidique avec l'extérieur, par exemple au moyen d'une ouverture pratiquée dans la semelle au cours de la fabrication. Le pneumatique 1 est de type semi-creux. Le pneumatique 1 est non gonflable, ce qui facilite la déformation et l'auto-nettoyage par décollage de la terre qui tend à s'accrocher au pneumatique 1.

Ici, les épaulements 53, 55 sont reliés respectivement à l'un et l'autre des flancs 7, 9. Les directions générales des épaulements 53, 55 forment avec les directions des flancs 7, 9 respectifs un angle référencé α (Alpha) compris entre 90° et 135° à l'état précontraint, hors roulage. Les directions générales des épaulements 53, 55 peuvent s'étendre généralement de manière parallèle à l'axe central 100 ou être inclinée sensiblement jusqu'à 45°. Les épaulements 53, 55 sont en outre sensiblement convexes, bombés vers l'extérieur. Cette forme facilite le décollage de la terre lors des déformations. En variante, les épaulements 53, 55 sont droits vus en coupe, voire légèrement concaves.

Ici, les pans 57 de la crête 51 sont reliées respectivement à l'une et l'autre des épaulements 53, 55. Les directions générales des pans 57 forment avec les directions générales des épaulements 53, 55 un angle référencé θ (Thêta) compris entre 90° et 120° à l'état précontraint, hors roulage. Les directions générales des pans 57 s'étendent sensiblement en formant un angle référencé β (Béta) par rapport à une direction radiale compris entre 0 et 45° à l'état précontraint, hors roulage.

La hauteur 201 de la crête 51 correspond à l'extension radiale de celle-ci, entre l'extrémité radiale du sommet 59 et le prolongement des surfaces extérieures des épaulements 53, 55 à l'état précontraint, hors roulage du pneumatique 1, comme cela est représenté en figure 5. Ici, la crête 51 s'étend radialement au-delà des épaulements 53, 55 sur une hauteur 201 comprise entre 30 et 120 millimètres.

La largeur de la crête 51, selon la direction axiale, est référencée 105 et est comprise, à l'état axialement comprimé, entre 30 et 120 millimètres.

En outre, la largeur 105 est sélectionnée de sorte que le rapport de la largeur 105 de la crête 51 sur la largeur 101 du pneumatique 1 soit compris entre 15 et 70 %.

En fonctionnement, dans un premier temps, le sommet 59 de la crête 51 entre en contact avec le sol en premier. La surface de contact entre le pneumatique 1 et le sol est réduite. La force d'appui suffit alors à faire pénétrer le sommet 59 dans la terre. La crête 51 s'enfonce progressivement dans le sol et forme le sillon. La forme de la crête 51 reste sensiblement inchangée en cours de fonctionnement. La crête 51 forme alors un raidisseur. La configuration de la crête 51 facilite la pénétration du sommet 59 puis des pans 57 dans le sol. Les pans 57 s'enfoncent dans la terre à la manière d'un coin. Ils écartent les parois latérales du sillon en tassant la terre. Les pans 57 forment des raidisseurs. Ceci améliore la tenue du sillon dans le temps.

Dans un deuxième temps, les épaulements 53, 55 viennent au contact de la terre de chaque côté du sillon. L'étendue, ou l'aire, de contact entre le pneumatique 1 et le sol augmente brusquement. La résistance du sol provoque le fléchissement des épaulements 53, 55. L'enveloppe se déforme de telle manière que les épaulements 53, 55 fléchissent sous l'effet du contact du pneumatique 1 avec le sol. La déformation facilite le décollage de la terre qui peut s'accumuler sur les surfaces extérieures. La crête 51 se rapproche de la semelle 3 sous l'effet du fléchissement des épaulements 53, 55. La crête 51 reste indéformée ou pratiquement indéformée.

Dans un troisième temps, une partie au moins de la bande de roulement 5 vient s'appuyer contre une partie au moins de la semelle 3. Le mouvement d'affaissement est stoppé. Ici, l'appui se fait par l'intermédiaire des saillies 75, 77 du pneumatique 1. Les épaulements 53, 55 viennent alors tasser la terre de chaque côté du sillon. Ceci permet d'améliorer la tenue dans le temps du sillon. Le risque que de la terre en surface entre deux sillons vienne chuter, puis combler les sillons après le passage du rouleau est réduit.

L'inclinaison des pans 57 par rapport aux épaulements 53, 55 génèrent une discontinuité. L'inclinaison des pans 57 et la position de la discontinuité peuvent être adaptées de manière à contrôler la largeur du sillon. Régler les formes et dimensions de la crête permet de contrôler la profondeur du sillon. La configuration des saillies 75, 77 permet de maîtriser le comportement dynamique du pneumatique 1, et ce quelle que soit la dureté et la résistance de la terre. La présence de la chambre 11 sous les épaulements 53, 55 permet de générer un affaissement contrôlé de la bande de roulement 5. Les épaulements 53, 55 se déforment suffisamment pour décoller la terre qui peuvent s'accumuler sur la bande de roulement 5, en particulier sur les épaulements 53, 55. Lorsque l'affaissement et le décollage de la terre a eu lieu, la formation du sillon par l'enfoncement de la crête 51 débute.

Au cours du mouvement d'affaissement, l'angle β entre les pans 57 et la direction radiale reste sensiblement constant tandis que l'angle α entre chaque épaulement 53, 55 et le flanc 7, 9 respectif et l'angle θ entre chaque épaulement 53, 55 et la crête 51 diminuent progressivement. La crête 51 de la bande de roulement 5 et la semelle 3 se rapprochent l'une de l'autre. Les flancs 7, 9, et en particulier leur portion radialement extérieure, se trouvent poussés axialement vers l'extérieur. Les surfaces latérales 33 sont sollicitées vers leur surface d'appui correspondante, par exemple vers la surface latérale 33 d'un pneumatique 1 adjacent. Il en résulte un serrage supplémentaire, en fonctionnement, de chaque surface latérale 33 contre une face d'appui adjacente qui rend difficile l'insertion de terre et/ou de débris entre la surface latérale 33 et la face d'appui correspondante. Ce serrage est localement accentué dans la portion angulaire active du pneumatique 1. Il est effectif lorsque la portion angulaire est en contact avec le sol. Cette zone est la plus exposée aux débris qui peuvent joncher le sol. Le risque d'insertion de terre et/ou de débris entre deux pneumatiques 1 est encore réduit.

À l'exception des zones pourvues des saillies 75, 77, la semelle 3, la bande de roulement 5 et les flancs 7, 9 présentent des épaisseurs sensiblement égales les unes aux autres. Les épaisseurs sont constantes dans la circonférence du pneumatique 1. Ceci facilite la prédiction du comportement dynamique. Cela limite également les risques d'apparition de zones de concentration de contrainte et d'amorce de pliage non souhaité.

Dans les exemples décrits ici, l'enveloppe du pneumatique 1 est réalisée d'un seul tenant. Elle est réalisée à base d'élastomère, par exemple du caoutchouc ou du polyuréthane. Le matériau utilisé présente ici une dureté Shore A comprise entre 50 et 70.

Dans les exemples décrits ici, le pneumatique 1 comprend en outre des armatures 13, 15 ou renforts, ici au nombre de trois. Les armatures 13, 15 sont formées d'anneaux métalliques noyés dans la semelle 3. Les anneaux sont obtenus en regroupant des fils métalliques en faisceaux. Les armatures 13, 15 peuvent être vues comme des joncs ou des tringles annulaires qui s'étendant circonférentiellement dans la semelle 3. Une armature 13 médiane est disposée dans la demi-épaisseur radialement intérieure de la semelle 3, c'est-à-dire à proximité de la surface de siège 31. Deux armatures 15 latérales sont disposées dans la demi-épaisseur radialement extérieure de la semelle 3, à la jonction avec les flancs 7, 9 et au voisinage de chacune des surfaces latérales 33. Les armatures 15 latérales sont symétriques l'une de l'autre par rapport au plan médian 200. L'armature 13 centrale présente une section sensiblement rectangulaire et allongée selon la direction axiale. Les armatures 15 latérales présentent chacune une section transversale sensiblement circulaire. Dans des variantes, le pneumatique 1 comprend, en complément ou en remplacement des armatures 13, 15 métalliques, des armatures prenant la forme de tissu ou de nappes, par exemple réalisées à base de polyester et/ou de polyamide.

Le pneumatique 1 présente ici des éléments de reliefs, formés dans la bande de roulement 5, ici dans le sommet 59. Les éléments de reliefs forment des exceptions au caractère uniforme du pneumatique 1 dans sa circonférence. Les éléments de reliefs sont sensiblement équidistants le long de la circonférence. Les éléments de reliefs améliorent l'adhérence du pneumatique 1 dans la terre et évite le blocage en rotation du rouleau et le raclage de la terre. Les éléments de reliefs forment des aspérités dans la terre, ici en fond de sillon, ce qui facilite l'accumulation de petites poches d'eau à la suite d'intempéries ou d'arrosage. Ainsi, la pénétration de l'eau dans la terre est améliorée. En outre, lorsque les sillons sont réalisés sur un terrain en pente, le ruissellement de l'eau au fond des sillons est limité et les phénomènes de lessivage de la terre également. Ici, les éléments de reliefs comprennent des empreintes 93, ou concavités,

En variante, les éléments de reliefs comprennent des crampons 91, ou saillies, en remplacement ou en combinaison des empreintes 93.

Dans les exemples décrits ici et comme cela apparaît sur les figures en coupe radiale, la présence d'éléments de reliefs ne modifie pas localement l'épaisseur de la bande de roulement 5. Au contraire, la surface intérieure du côté de la chambre 11 de la bande de roulement 5 présente des formes complémentaires des éléments de reliefs ménagés dans la surface extérieure de la bande de roulement 5. La création d'un crampon 91 dans la surface extérieure de la bande de roulement 5 entraîne l'apparition d'une forme en creux correspondante dans la surface intérieure du côté de la chambre 11. Les crampons 91 et/ou les empreintes 93 forment alors des renforts du sommet 59 de la bande de roulement 5. L'apparition de surépaisseurs ou d'amincissement locaux est évitée.

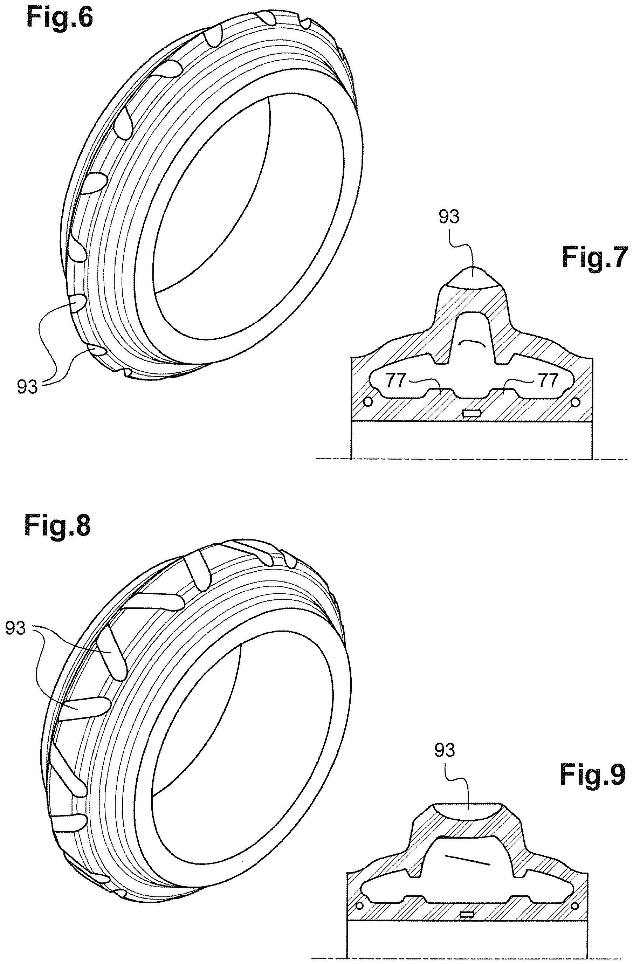

Il est maintenant fait références aux figures 6 à 17. Les éléments fonctionnellement similaires à ceux des modes de réalisation décrits ci-avant portent les mêmes références numériques.

Les figures 6 et 7 montrent un pneumatique 1 analogue au pneumatique 1 des figures 1 à 4 à l'exception de la forme des 77 de la semelle 3 qui sont plus larges que les saillies 75 de la bande de roulement 5. À l'état précontraint axialement, la largeur de crête 105 est d'environ 50 mm tandis que la largeur totale 101 est d'environ 150 mm, soit un rapport d'environ 33 %. La hauteur de crête 201 est d'environ 40 mm.

Les figures 8 et 9 montrent un pneumatique 1 avec un rapport de largeur 105 de crête sur la largeur totale 101 du pneumatique 1 plus important que dans les modes de réalisation précédents. Les empreintes 93 présentent une forme allongée et de biais sur la largeur de la crête 51, de sens alterné une fois sur deux le long de la circonférence. À l'état précontraint axialement, la largeur de crête 105 est d'environ 96 mm tandis que la largeur totale 101 est d'environ 200 mm, soit un rapport d'environ 48 %. La hauteur de crête 201 est d'environ 40 mm.

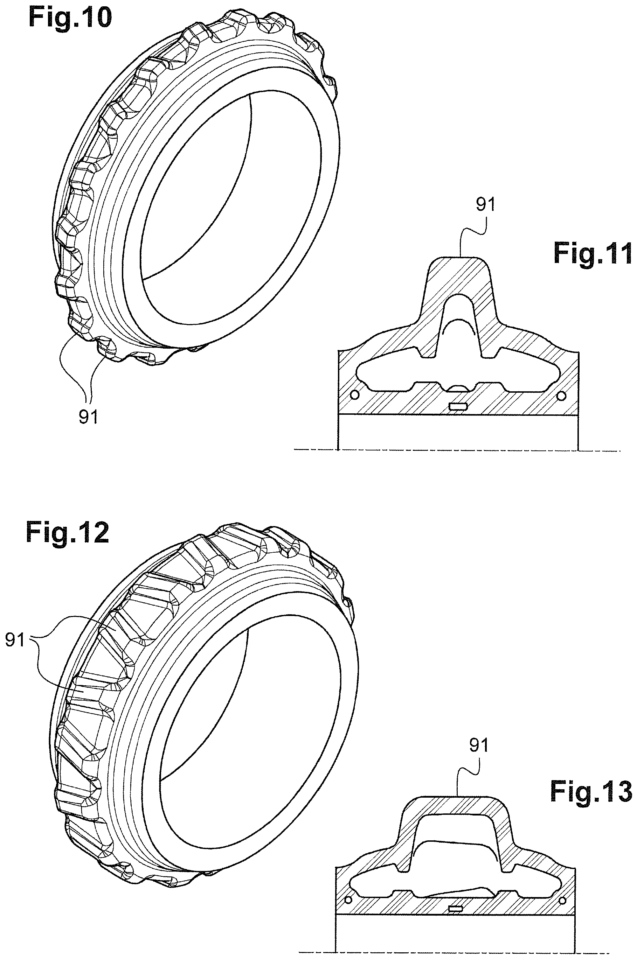

Les figures 10 et 11 montrent un pneumatique 1 avec un rapport de largeur 105 de crête sur la largeur totale 101 du pneumatique 1 plus petit que dans les modes de réalisation précédents. Les empreintes 93 ont été remplacées par des crampons 91 généralement en forme de créneaux. À l'état précontraint axialement, la largeur de crête 105 est d'environ 40 mm tandis que la largeur totale 101 est d'environ 125 mm, soit un rapport d'environ 30 %. La hauteur de crête 201 est d'environ 33 mm, crampons 91 inclus. Ce mode de réalisation est particulièrement efficace pour travailler des sols légers à grande vitesse.

Les figures 12 et 13 montrent un pneumatique 1 avec un rapport de largeur 105 de crête sur la largeur totale 101 du pneumatique 1 important. Les crampons 91 présentent une forme allongée et de biais sur la largeur de la crête 51, de sens alterné une fois sur deux le long de la circonférence. À l'état précontraint axialement, la largeur de crête 105 est d'environ 96 mm tandis que la largeur totale 101 est d'environ 200 mm, soit un rapport d'environ 48 %. La hauteur de crête 201 est d'environ 40 mm, crampons 91 inclus. Ce mode de réalisation est particulièrement efficace pour travailler des sols légers à grande vitesse.

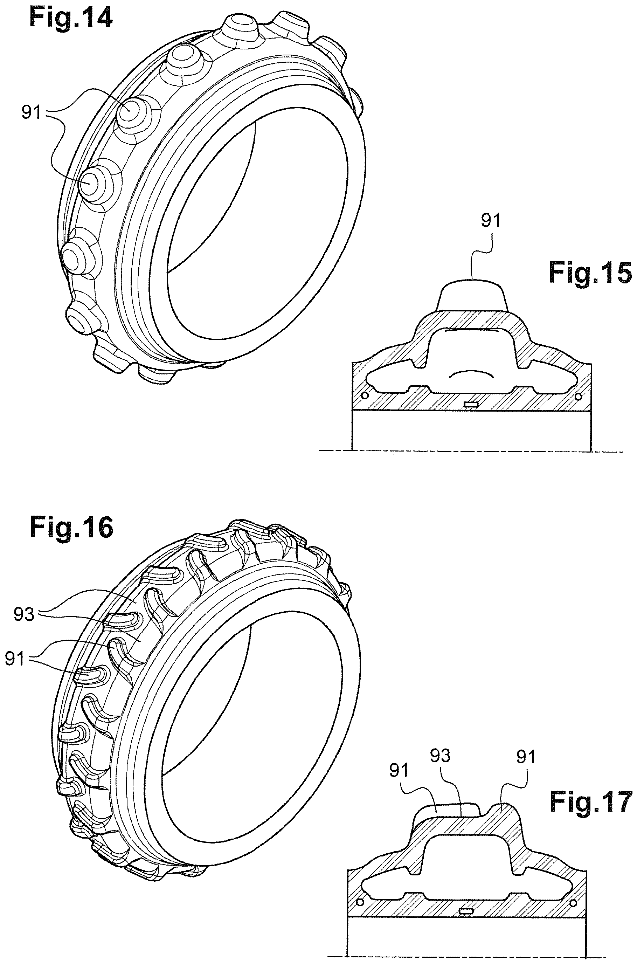

Les figures 14 et 15 montrent un pneumatique 1 avec un rapport de largeur 105 de crête sur la largeur totale 101 du pneumatique 1 important. Les crampons 91 présentent une section de forme circulaire et sont sensiblement identiques les uns aux autres. À l'état précontraint axialement, la largeur de crête 105 est d'environ 100 mm tandis que la largeur totale 101 est d'environ 200 mm, soit un rapport d'environ 50 %. La hauteur de crête 201 est d'environ 53 mm, crampons 91 inclus.

Dans les modes de réalisations des figures 1 à 15, les formes et dispositions des crampons 91 et/ou empreintes 93 sont telles que le pneumatique 1 ne présente aucun sens de roulage imposé. Le pneumatique 1 peut rouler indifféremment dans un sens ou dans l'autre. Il peut donc être monté sur son support 2 dans un sens ou dans l'autre de manière équivalente. Dans le mode de réalisation des figures 16 et 17, le pneumatique 1 présente des crampons 91 en forme de demi-chevrons de chaque côté de la crête 51. Le pneumatique 1 présente un sens de montage sur son support 2. À l'état précontraint axialement, la largeur de crête 105 est d'environ 100 mm tandis que la largeur totale 101 est d'environ 200 mm, soit un rapport d'environ 50 %. La hauteur de crête 201 est d'environ 41 mm, crampons 91 inclus. Ce mode de réalisation présente une déformation importante des épaulements et un bon auto-nettoyage.

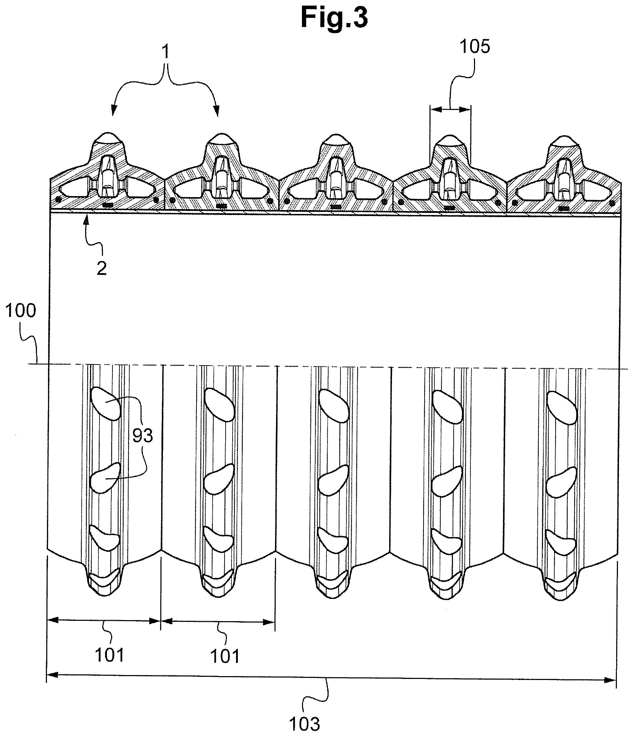

Dans le mode de réalisation des figures 1 et 3, la portion du rouleau représentée est une portion centrale. Les pneumatiques 1 sont analogues les uns aux autres. En variante, un rouleau peut comprendre des pneumatiques de configurations différentes pour créer des sillons variés. En variante, certains au moins des pneumatiques d'un rouleau peuvent être asymétriques. Par exemple, l'un au moins des pneumatiques disposés aux extrémités du support 2 peut présenter partiellement une forme spécifique, en particulier qui correspond à une forme du flasque de butée.

L'invention peut également être vue comme un outil agricole comprenant un pneumatique tel que décrit ci-avant ou un rouleau sillonneur équipé d'un pneumatique tel que décrit ci-avant.

L'invention ne se limite pas aux exemples de pneumatiques décrits ci-avant, seulement à titre d'exemple, mais elle englobe toutes les variantes que pourra envisager l'homme de l'art dans le cadre des revendications ci-après.

## Revendications

1. Pneumatique (1) pour rouleau sillonneur du type comprenant :
- une semelle (3) par l'intermédiaire de laquelle le pneumatique (1) se monte sur un support (2) de rouleau agricole,
- une bande de roulement (5) opposée à la semelle (3), et
- deux flancs (7 ; 9) reliant la bande de roulement (5) à la semelle (3),
la semelle (3), la bande de roulement (5) et les flancs (7 ; 9) délimitant conjointement une chambre (11) non gonflable,
**caractérisé en ce que** la bande de roulement (3) comprend :
- au moins une portion en forme de crête (51), et
- deux portions d'épaulements (53 ; 55) reliant chacune la portion en forme de crête (51) à un flanc (7 ; 9) respectif,
la chambre (11) s'étendant en partie au moins latéralement sous les portions d'épaulements (53 ; 55) et radialement dans la portion en forme de crête (51).

2. Pneumatique (1) selon la revendication 1, dans lequel les portions d'épaulements (53 ; 55) présentent une forme généralement convexe.

3. Pneumatique (1) selon l'une des revendications précédentes, dans lequel une surface extérieure de la portion en forme de crête (51) porte au moins un élément de relief (91, 93).

4. Pneumatique (1) selon l'une des revendications précédentes, dans lequel la semelle (3) et/ou la bande de roulement (5) comprennent au moins une portion (75, 77) faisant saillie dans la chambre (11) sous les portions d'épaulements (53; 55) et agencées de manière à limiter par butée le rapprochement de la semelle (3) et de la bande de roulement (5).

5. Pneumatique (1) selon l'une des revendications précédentes, dans lequel l'un au moins des flancs (7, 9) présente une surface latérale (33) tronconique.

6. Pneumatique (1) selon l'une des revendications précédentes, dans lequel l'une au moins des deux portions d'épaulements (53 ; 55) est reliée à un flanc (7 ; 9) respectif de sorte que la direction générale de la portion d'épaulement (53 ; 55) et la direction générale du flanc (7 ; 9) respectif forment un angle (α) compris entre 90° et 135°.

7. Pneumatique (1) selon l'une des revendications précédentes, dans lequel la portion en forme de crête (51) présente des pans (57) inclinés de sorte que la direction générale de chacun des pans (57) forme un angle (β) compris entre 0° et 45° par rapport à une direction radiale (200).

8. Pneumatique (1) selon l'une des revendications précédentes, dans lequel l'une au moins des deux portions d'épaulements (53 ; 55) est reliée à la portion en forme de crête (51) de sorte que la direction générale de la portion d'épaulement (53 ; 55) et la direction générale de la portion en forme de crête (51) forment un angle (θ) compris entre 90° et 120°.

9. Pneumatique (1) selon l'une des revendications précédentes, dans lequel la portion en forme de crête (51) s'étend radialement au-delà des portions d'épaulements (53 ; 55) sur une hauteur (201) comprise entre 30 et 120 millimètres.

10. Pneumatique (1) selon l'une des revendications précédentes, dans lequel le rapport de largeur (105) sur laquelle s'étend la portion en forme de crête (51) sur la largeur totale (101) du pneumatique (1) est compris entre 15 % et 70 %.

11. Rouleau sillonneur comprenant un support (2) et au moins un pneumatique (1) selon l'une des revendications précédentes se montant sur le support (2).

## Patentansprüche

1. Reifen (1) für Furchenzieher-Walze, in der Art Folgendes umfassend:
- eine Sohle (3), anhand derer der Reifen (1) auf einer Halterung (2) einer Bodenwalze montiert wird,
- eine Lauffläche (5) gegenüber der Sohle (3), und
- zwei Flanken (7; 9), die die Lauffläche (5) mit der Sohle (3) verbinden,
wobei die Sohle (3), die Lauffläche (5) und die Flanken (7; 9) gemeinsam eine nicht aufblasbare Kammer (11) begrenzen,
**dadurch gekennzeichnet, dass** die Lauffläche (3) umfasst:
- mindestens einen Abschnitt in Form einer Krone (51), und
- zwei Ansatzabschnitte (53; 55), die jeweils den Abschnitt in Form einer Krone (51) mit einer jeweiligen Flanke (7; 9) verbinden,
wobei sich die Kammer (11) teilweise mindestens seitlich unter den Ansatzabschnitten (53; 55) und radial in dem Abschnitt in Form einer Krone (51) erstreckt.

2. Reifen (1) nach Anspruch 1, wobei die Ansatzabschnitte (53; 55) eine im Allgemeinen konvexe Form aufweisen.

3. Reifen (1) nach einem der vorstehenden Ansprüche, wobei eine Außenoberfläche des Abschnitts in Form einer Krone (51) mindestens ein Reliefelement (91, 93) trägt.

4. Reifen (1) nach einem der vorstehenden Ansprüche, wobei die Sohle (3) und/oder die Lauffläche (5) mindestens einen Abschnitt (75, 77) umfassen, der in der Kammer (11) unter den Ansatzabschnitten (53; 55) hervorsteht, und die derart angeordnet sind, um per Anschlag die Annäherung der Sohle (3) und der Lauffläche (5) zu begrenzen.

5. Reifen (1) nach einem der vorstehenden Ansprüche, wobei mindestens eine der Flanken (7, 9) eine kegelstumpfartige Seitenoberfläche (33) aufweist.

6. Reifen (1) nach einem der vorstehenden Ansprüche, wobei mindestens einer der beiden Ansatzabschnitte (53; 55) derart mit einer jeweiligen Flanke (7; 9) verbunden ist, dass die allgemeine Richtung des Ansatzabschnitts (53; 55) und die allgemeine Richtung der jeweiligen Flanke (7; 9) einen Winkel (*α*) bilden, der zwischen 90° und 135° liegt.

7. Reifen (1) nach einem der vorstehenden Ansprüche, wobei der Abschnitt in Form einer Krone (51) schräge Flächen (57) aufweist, sodass die allgemeine Richtung einer jeden der Flächen (57) einen Winkel (ß) bildet, der zwischen 0° und 45° in Bezug auf eine radiale Richtung (200) liegt.

8. Reifen (1) nach einem der vorstehenden Ansprüche, wobei mindestens einer der beiden Ansatzabschnitte (53; 55) mit dem Abschnitt in Form einer Krone (51) verbunden ist, sodass die allgemeine Richtung des Ansatzabschnitts (53; 55) und die allgemeine Richtung des Abschnitts in Form einer Krone (51) einen Winkel (θ) bilden, der zwischen 90° und 120° liegt.

9. Reifen (1) nach einem der vorstehenden Ansprüche, wobei sich der Abschnitt in Form einer Krone (51) radial über die Ansatzabschnitte (53; 55) hinaus auf einer Höhe (201) erstreckt, der zwischen 30 und 120 Millimetern liegt.

10. Reifen (1) nach einem der vorstehenden Ansprüche, wobei das Verhältnis einer Breite (105), über die sich der Abschnitt in Form einer Krone (51) erstreckt, zur Gesamtbreite (101) des Reifens (1) zwischen 15 % und 70 % liegt.

11. Furchenzieher-Walze, eine Halterung (2) und mindestens einen Reifen (1) nach einem der vorstehenden Ansprüche umfassend, der auf der Halterung (2) montiert wird.

## Claims

1. Tire (1) for a furrow press roller of the type comprising:
- a sole (3) via which the tire (1) is mounted on a field roller support (2),
- a tread (5) opposite to the sole (3), and
- two sidewalls (7; 9) connecting the tread (5) to the sole (3),
the sole (3), the tread (5) and the side walls (7; 9) together delimiting a non-inflatable chamber (11),
**characterized in that** the tread (3) comprises:
- at least one crest-shaped portion (51), and
- two shoulder portions (53; 55) each connecting the crest-shaped portion (51) to a respective sidewall (7; 9),
the chamber (11) extending partially at least laterally under the shoulder portions (53; 55) and radially into the crest-shaped portion (51).

2. Tire (1) according to Claim 1, in which the shoulder portions (53; 55) are of convex overall shape.

3. Tire (1) according to one of the preceding claims, in which an exterior surface of the crest-shaped portion (51) bears at least one relief element (91, 93).

4. Tire (1) according to one of the preceding claims, in which the sole (3) and/or the tread (5) comprise at least one portion (75, 77) projecting into the chamber (11) under the shoulder portions (53; 55) and arranged in such a way as to limit, through abutment, the extent to which the sole (3) and the tread (5) can move closer together.

5. Tire (1) according to one of the preceding claims, in which at least one of the sidewalls (7, 9) has a frustoconical lateral surface (33).

6. Tire (1) according to one of the preceding claims, in which at least one of the two shoulder portions (53; 55) is connected to a respective sidewall (7; 9) so that the overall direction of the shoulder portion (53; 55) and the overall direction of the respective sidewall (7; 9) form an angle (α) of between 90° and 135°.

7. Tire (1) according to one of the preceding claims, in which the crest-shaped portion (51) has inclined flanks (57) such that the overall direction of each of the flanks (57) forms an angle (β) of between 0° and 45° with respect to a radial direction (200).

8. Tire (1) according to one of the preceding claims, in which at least one of the two shoulder portions (53; 55) is connected to the crest-shaped portion (51) so that the overall direction of the shoulder portion (53; 55) and the overall direction of the crest-shaped portion (51) form an angle (θ) of between 90° and 120°.

9. Tire (1) according to one of the preceding claims, in which the crest-shaped portion (51) extends radially beyond the shoulder portions (53; 55) over a height (201) of between 30 and 120 millimeters.

10. Tire (1) according to one of the preceding claims, in which the ratio of the width (105) over which the crest-shaped portion (51) extends to the total width (101) of the tire (1) is between 15% and 70%.

11. Furrow press roller comprising a support (2) and at least one tire (1) according to one of the preceding claims, that mounts on the support (2)
